# EUROPÄISCHE PATENTSCHRIFT

(11) **EP 3 529 814 B1**
(45) Veröffentlichungstag und Bekanntmachung des Hinweises auf die Patenterteilung: **12.10.2022**
(21) Anmeldenummer: 17757780.6
(22) Anmeldetag: 28.08.2017
(51) Int. Cl.: H01F 7/127, H01F 7/08, H01F 7/16, F16K 31/06

(54) **ELEKTROMAGNETISCHES STELLGLIED**
ELECTROMAGNETIC ACTUATOR
ACTIONNEUR ÉLECTROMAGNÉTIQUE

(30) Priorität: 21.10.2016 DE 102016220767
(43) Veröffentlichungstag der Anmeldung: 28.08.2019
(73) Patentinhaber: Robert Bosch GmbH, 70442 Stuttgart (DE)
(72) Erfinder: KLENK, Alexander, 71706 Markgroeningen (DE); SCHUDT, Klaus, 74226 Nordheim (DE)
(86) Internationale Anmeldenummer: PCT/EP2017/071566
(87) Internationale Veröffentlichungsnummer: WO 2018/072916

(56) Entgegenhaltungen:
- EP-A1- 3 007 188
- JP-A- 2008 196 597
- US-A- 4 552 311
- US-A1- 2006 011 245
- US-A1- 2014 166 915
- US-A1- 2014 361 206
- US-A1- 2015 380 143

## Beschreibung

### Stand der Technik

Die Erfindung betrifft ein elektromagnetisches Stellglied nach dem Oberbegriff des Anspruchs 1.

Bei modernen Kraftfahrzeug-Automatikgetrieben werden hydraulisch betätigte Kupplungen zum Wechsel der Gänge eingesetzt. Damit diese Schaltvorgänge ruckfrei und für den Fahrer unmerklich ablaufen ist es notwendig, den hydraulischen Druck an den Kupplungen entsprechend vorgegebenen Druckrampen mit höchster Druckpräzision einzustellen. Der hierfür erforderliche Druck wird regelmäßig mit Hilfe von hydraulischen Druckregelventilen bereitgestellt. Diese Druckregelventile können insbesondere über ein elektromagnetisches Stellglied betätigt werden. Beispiele für elektromagnetische Stellglieder findet man in der DE 10 2012 223 430 A1 sowie der DE 10 2008 044 237 A1. Weitere elektromagnetische Stellglieder sind bekannt aus US 2015/380143 A1, US 2006/011245 A1 und US 2014/361206 A1.

### Offenbarung der Erfindung

Das der Erfindung zugrundeliegende Problem wird durch ein elektromagnetisches Stellglied nach Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die Erfindung weist den Vorteil auf, dass Material und Kosten dadurch eingespart werden können, dass der Deckel die Polscheibe aufweist und dennoch einstückig ausgebildet ist. Kosteneinsparungen ergeben sich hierbei durch die Reduzierung von Investitionen in Fertigungseinrichtungen und insbesondere dadurch, dass der Deckel samt Polscheibe in nur einem einzigen Arbeitsgang am Stellglied befestigbar ist. In vorteilhafter Weise findet zudem eine Funktionsintegration statt, da die Funktion der Polscheibe, nämlich den Magnetfluss zu ermöglichen und damit den Magnetkreis zu schließen, sowie die Funktion des Deckels, nämlich insbesondere die axiale Begrenzung des Ankerraums, mittels eines einzigen Bauteils wahrgenommen werden. Dennoch werden eine flexible Befestigung des Deckels an insbesondere einem Stellgliedgehäuse, sowie eine flexible Anordnung eines elektrischen Anschlusses für die Spule am Deckel ermöglicht.

Der Deckel ist topfförmig mit einem Deckelmantel und einem Deckelboden ausgebildet, wobei der Deckelmantel und/oder der Deckelboden an einem den Ankerraum begrenzenden Polrohr anliegt bzw. anliegen. Das Polrohr begrenzt folglich in radialer Richtung, also senkrecht zur Längsachse, den Ankerraum, während der Deckel an einer axialen Endseite den Ankerraum begrenzt. Das Polrohr dient hierbei einerseits zur Lagerung und zur Führung des Ankers, andererseits wird durch das Polrohr auch der von der Spule erzeugbare magnetische Fluss geleitet.

In diesem Zusammenhang ist insbesondere denkbar, dass entweder lediglich der Deckelmantel radial am Polrohr anliegt, oder dass sowohl der Deckelmantel als auch der Deckelboden am Polrohr radial und axial anliegen. Am radialen und/oder axialen Übergang vom Polrohr zum Deckel werden magnetische Übergänge ausgebildet, sodass ein magnetischer Fluss vom Polrohr in den die Polscheibe aufweisenden bzw. ausbildenden Deckel zur Ausbildung eines magnetischen Kreises ermöglicht ist. Je größer die Magnetflussübergangsflächen hierbei sind, desto höher ist auch der magnetische Wirkungsgrad. Insbesondere, wenn der Deckel radial und axial am Polrohr anliegt, kann eine nahezu luftspaltfreie axiale Übergangsfläche dargestellt werden, was zu einem erhöhten magnetischen Wirkungsgrad führt.

Das Polrohr weist einen von der Spule umgebenen ersten Abschnitt und einen vom Deckelmantel umgebenen zweiten Abschnitt auf, wobei der Außendurchmesser des zweiten Abschnitts 10% bis 30%, insbesondere 20%, größer ist als der Außendurchmesser des ersten Abschnitts. Dadurch lassen sich große radiale Magnetflussübergangsflächen darstellen, ohne dass das Zerspanungsvolumen am Polrohr zu stark ansteigt. Ferner wird hierdurch gewährleistet, dass genügend Freiraum am Deckel für Steckeraussparungen zur Anordnung eines elektrischen Steckers zum elektrischen Anschluss der Spule zur Verfügung stehen.

Denkbar ist ferner, dass der Deckelboden wenigstens einen als Ankeranschlag ausgebildeten Vorsprung aufweist. Insbesondere können mehrere Vorsprünge vorhanden sein. Hierdurch kann insbesondere das sogenannte magnetische Kleben des Ankers am Deckel verhindert werden, da die Kontaktfläche zum Deckel dann, wenn der Anker am Deckel zur Anlage kommt, vergleichsweise gering ist und ein Spalt zwischen Anker und dem Deckelboden durch die Ausbildung des Vorsprungs vorhanden ist.

Dabei kann bzw. können der Deckelmantel und/oder der Deckelboden wenigstens eine Nut zur Entlüftung des Ankerraums aufweisen. Denkbar ist insbesondere, dass wenigstens eine Nut vorgesehen ist, die sich über den Deckelboden und den Deckelmantel erstreckt. Folglich kann trotz der Integration der Polscheibe in den Deckel durch die Nut hindurch eine Entlüftung des Ankerraums ermöglicht werden beziehungsweise es kann Hydraulikflüssigkeit vom Ankerraum hinaus beziehungsweise in diesen hinein gefördert werden.

Denkbar ist weiterhin, dass der Deckelboden vom Pohlrohr beabstandet ist. Dadurch kann insbesondere sichergestellt werden, dass eine axiale Befestigungskraft keinen schädlichen Einfluss auf eine etwaige im Polrohr vorgesehene V-Nut hat. Eine derartige V-förmige Nut wird bei einstückigen Polrohren zur Darstellung einer magnetischen Trennung realisiert.

In diesem Zusammenhang kann insbesondere vorgesehen sein, dass auf der dem Deckel abgewandten Seite des Polrohrs eine den Ankerraum begrenzende Flussscheibe vorgesehen ist, die mit dem Polrohr fest verbunden, insbesondere vercrimpt oder verpresst, ist. Eine Flussscheibe kann insbesondere an der Polscheibe gegenüberliegenden axialen Ende des Ankerraums vorgesehen sein und ebenfalls zum Leiten des magnetischen Flusses und damit zur Bereitstellung eines magnetischen Kreises dienen.

Um insbesondere dann, wenn der Deckelboden vom Polrohr beabstandet sein soll, diese Beabstandung sicherzustellen, ist es in vorteilhafter Weise denkbar, das Polrohr fest mit der Flussscheibe zu verbinden.

In diesem Zusammenhang ist denkbar, dass der Deckelmantel außenseitig wenigstens einen Vorsprung aufweist, wobei sich der Vorsprung an einem Stellgliedgehäuse abstützt. Dadurch kann sichergestellt werden, dass dann, wenn die Vorsprünge am Stellgliedgehäuse zur Anlage kommen, eine axiale Beabstandung zwischen Deckelboden und Polrohr bereitgestellt wird.

Vorgeschlagen wir zudem, dass der Deckel eine Ausnehmung zur Anordnung eines elektrischen Steckers zur Bestromung der Spule umfasst. Die Ausnehmung kann insbesondere als Kreissegment ausgebildet sein, so dass aus einem anderweitig kreisrunden Deckel ein Kreissegment ausgespart ist, so dass hierdurch ein elektrischer Stecker geführt werden kann beziehungsweise daran angeordnet werden kann.

Weiterhin ist denkbar, dass der Deckel pulvermetallurgisch hergestellt, insbesondere gesintert, ist. Hierdurch können Werkstoffe mit günstigen magnetischen Eigenschaften verwendet werden. Außerdem lassen sich hierbei besonders einfach und kostengünstig Nuten oder Anschlagbereiche für den Anker oder auch eine Ausnehmung für eine Steckerdurchgang mit geringem Zeit-und Kostenaufwand am Deckel darstellen.

Besonders vorstellbar ist, ein vorliegend vorgeschlagenes Stellglied bei einem Druckregelventil vorzusehen, wobei ein Ventilelement zum Leiten und Druckregeln eines Arbeitsmediums, wie etwa Öl, mittels des Stellelements betätigbar ist. Ein solches Druckregelventil kann insbesondere in einem PKW-Automatikgetriebe zum hydraulischen Betätigen von Kupplungen zum Wechseln der Gänge eingesetzt werden.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden.

Es zeigen:
- Figur 1: einen Längsschnitt durch ein elektromagnetisches Stellglied gemäß einer ersten Ausführungsform;
- Figur 2: eine perspektivische Darstellung des Deckels des Stellglieds gemäß Figur 1;
- Figur 3: einen Längsschnitt durch ein elektromagnetisches Stellglied gemäß einer zweiten Ausführungsform; und
- Figur 4: eine perspektivische Darstellung des Deckels des Stellglieds gemäß Figur 3.

Funktionsäquivalente Elemente und Bereiche tragen in den nachfolgenden Figuren die gleichen Bezugszeichen und sind nicht nochmals im Detail erläutert.

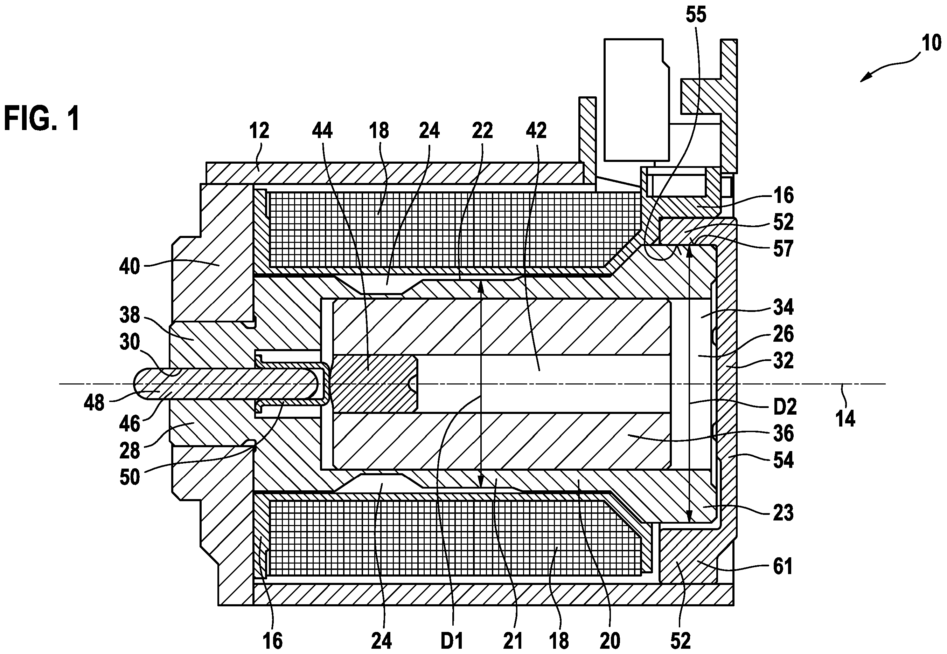

In Figur 1 trägt ein elektromagnetisches Stellglied für ein nicht näher bezeichnetes Druckregelventil insgesamt das Bezugszeichen 10. Das Stellglied 10 umfasst ein im Wesentlichen rohrförmiges Gehäuse 12, welches insbesondere aus einem gerollten und verknüpften Blechbauteil hergestellt sein kann. Das Gehäuse 12 verläuft im Wesentlichen rotationssymmetrisch um eine Längsachse 14. Im Gehäuse 12 ist ebenfalls rotationssymmetrisch um die Längsachse 14 verlaufend ein Spulenkörper 16 angeordnet, der eine Magnetspule 18 trägt. Die Magnetspule 18 kann mit einem nicht näher dargestellten Stromanschluss mit Strom versorgt werden. Innerhalb des Spulenkörpers 16 ist ein Polrohr 20 vorgesehen. Das Polrohr 20 weist einen ersten von der Spule 18 umgebenen zylindrischen Abschnitt 21 und einen zweiten am rechten Endbereich der Figur 1 vorgesehenen Abschnitt 23 auf. Der erste Abschnitt 21 weist einen Außendurchmesser D1 auf, während der zweite Abschnitt 23 einen Außendurchmesser D2 aufweist, wobei D2 circa 20% größer ist als D1. Das Polrohr 20 weist an seinem Außenumfang 22 im Bereich des Abschnitts 21 eine insgesamt in etwa V-förmige Aussparung 24 auf.

Die Aussparung 24 ist insoweit als V-Nut ausgebildet und dient zur Verhinderung eines magnetischen Kurzschlusses. Ferner weist das Polrohr 20 eine zylindrische gestufte Innenausnehmung 26 auf. Diese verläuft vom in der Figur 1 gezeigten rechten Ende des Polrohrs bis zu einem im linken Endbereich vorgesehenen magnetischen Joch 28, welches eine Durchgangsöffnung 30 umfasst. Die Innenausnehmung 26 wird an einem ersten axialen Ende vom Joch 28, in radialer Richtung vom Polrohr 20 und an einem zweiten axialen Ende von einem Deckel 32 begrenzt. Die zylindrische Ausnehmung 26 bildet einen Ankerraum 34 aus, in dem ein Anker 36 gleitverschiebbar gelagert ist. In eine Zentralausnehmung 42 des Ankers 36 ist ein Bolzen 44 eingepresst. Wird der Anker in Richtung des Jochs 28 bewegt, so gelangt der Bolzen 44 zur Anlage an das Stellelement 46 des Stellglieds 10. Das Stellelement 46 ist zweiteilig aufgebaut und umfasst einen durch die Durchgangsöffnung 30 geführten Stößel 48 sowie ein darauf aufgepresstes Trennstück 50, an welches der Bolzen 44 zur Anlage bringbar ist. Das Stellelement 46 kann insbesondere zur Betätigung eines nicht näher dargestellten Ventilelements eines Druckregelventils ausgebildet sein. Auf ein als Vorsprung ausgebildetes, kreiszylindrisches freies Ende 38 des Jochs 28 ist eine kreisringförmige Flussscheibe 40 aufgesetzt. Die Flussscheibe 40 dient zum Leiten eines von der Magnetspule 18 erzeugten magnetischen Flusses.

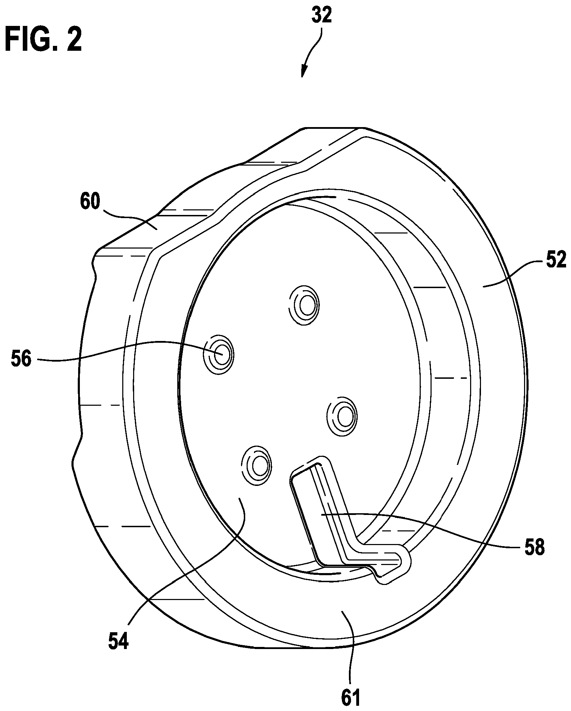

Wie insbesondere aus Figur 2 ersichtlich ist, ist der Deckel 32 topfförmig mit einem Deckelmantel 52 und einem Deckelboden 54 ausgebildet. Gemäß Figur 1 liegt die Innenumfangsfläche 55 des Deckelmantels 52 an der Außenumfangsfläche 57 des zweiten Abschnitts 23 des Polrohrs 20 an. Zudem liegt der Deckelboden 54 axial am zweiten Abschnitt 23 des Polrohrs 20 an. Dadurch kann eine besonders große Magnetflussübergangsfläche bereitgestellt werden. Zur Ausbildung von Ankeranschlägen 56 weist der Deckelboden 54 eine Anzahl Vorsprünge auf. Ferner ist eine Entlüftungsnut 58 im Deckel 32 vorgesehen, welche sich vom Deckelboden 54 über den Deckelmantel 52 erstreckt. Zur Ausbildung einer Aussparung für einen elektrischen Stecker ist ein Kreissegment von dem ansonsten kreiszylindrischen Deckel 32 ausgespart, so dass ein Abschnitt 60 des Deckelmantels 52 als Gerade ausgebildet ist.

Die Funktionsweise des Stellglieds 10 ist sodann wie folgt: Wird an die Magnetspule 18 ein Strom angelegt, so resultiert daraus ein magnetischer Fluss, wobei ein magnetischer Kreis zwischen Polrohr 20, Flussscheibe 40 und dem Deckel 32 ausgebildet wird. Der Deckel 32 ist folglich zumindest abschnittsweise magnetisch und bildet damit eine Polscheibe 61 aus. Aus dem magnetischen Fluss durch den magnetischen Kreis resultiert eine magnetische Kraft auf den Anker 36, der dadurch entlang der Längsachse 14 je nach Strombeaufschlagung der Spule 18 verschoben wird. Auf Grund der Bewegungskopplung mit dem Stellelement 46 wird dieses ebenfalls in axialer Richtung entlang der Längsachse 14 bewegt.

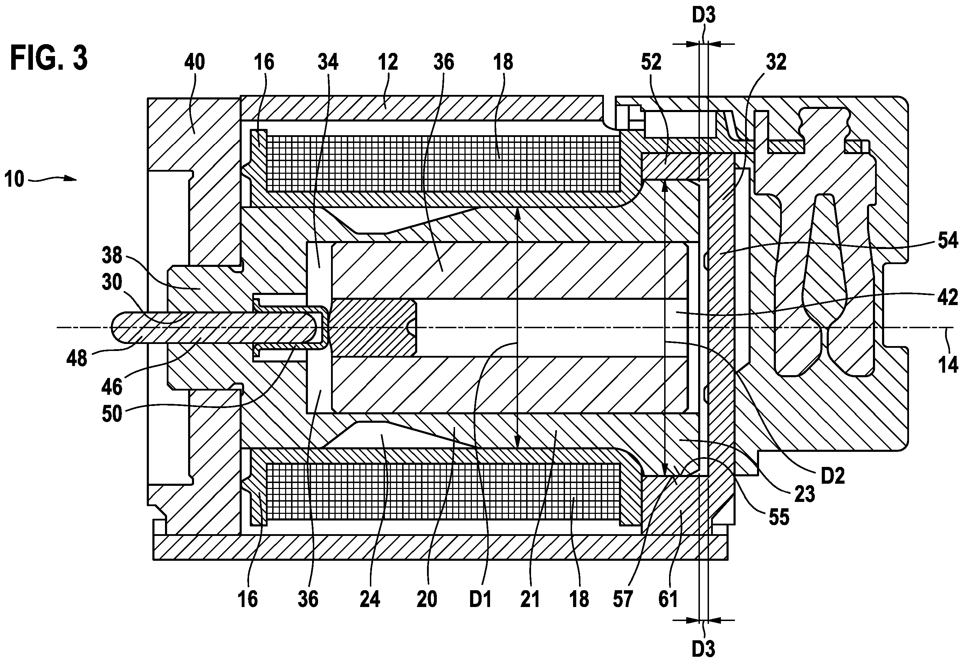

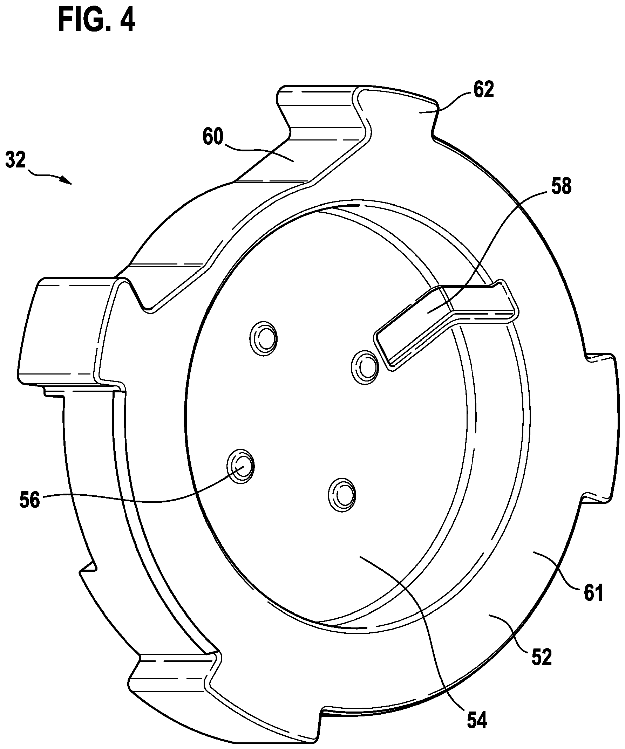

Im Unterschied zu der in den Figuren 1 und 2 gezeigten Ausführungsform liegt bei Figur 3 die Innenumfangsfläche 55 des Deckelmantels 52 zwar an der Außenumfangsfläche 57 des zweiten Abschnitts 23 des Polrohrs 20 an.. In axialer Richtung entlang der Längsachse 14 ist der Deckelboden 54 allerdings vom Polrohr 20 um einen Abstand D3 beabstandet. Dadurch wird zwar die Magnetflussübergangsfläche reduziert. Allerdings wird so sichergestellt, dass kein schädlicher Einfluss auf die V-förmige Aussparung 24 des Polrohrs 20 durch eine axiale Befestigungskraft des Deckels 32 ausgeübt wird. Um die axiale Beabstandung sicherzustellen, ist das Polrohr 20 mit der Flussscheibe 40 fest verbunden, beispielsweise vercrimpt oder verpresst. Ferner stützt sich der Deckel 32 am Gehäuse 12 ab, in dem am Außenumfang des Deckelmantels 52 eine Anzahl Vorsprünge 62 (siehe Figur 4) vorgesehen sind, die laschenförmig ausgebildet sein können und insbesondere in komplementäre Aussparungen im Gehäuse einführbar sind. Die dem Gehäuse zugewandten Seiten der Vorsprünge 62 dienen folglich als Anschlagflächen zur Anlage an komplementären Anschlagflächen des Gehäuses 12, so dass eine Beabstandung zwischen Deckel 32 und Polrohr 20 sichergestellt ist.

## Patentansprüche

1. Elektromagnetisches Stellglied (10) mit einem Gehäuse (12), mit einem in dem Gehäuse (12) angeordneten und rotationssymmetrisch um eine Längsachse (14) verlaufenden Spulenkörper (16), der eine um die Längsachse (14) verlaufende Spule (18) zur Erzeugung eines Magnetfelds zur Bewegung eines Ankers (36) trägt, wobei innerhalb des Spulenkörpers (16) ein Polrohr (20) vorgesehen ist, wobei das Polrohr (20) einen ersten, von der Spule (18) umgebenen zylindrischen Abschnitt (21) und zweiten Abschnitt (23) aufweist, wobei das Polrohr an seinem Außenumfang (24) im Bereich des ersten Abschnitts (21) eine in etwa V-förmige Aussparung (24) und eine zylindrische Innenausnehmung (26) aufweist, die einen Ankerraum (34) ausbildet, in dem der Anker (36) entlang der Längsachse (14) gleitverschiebbar gelagert ist, wobei das Stellglied weiterhin ein mit dem Anker (36) bewegungsgekoppeltes Stellelement (46), insbesondere zur Betätigung eines Ventilelements eines Druckregelventils, und eine Polscheibe (61) zum Leiten eines magnetischen Flusses und einen Deckel (32) aufweist, wobei der Deckel (32) topfförmig mit einem Deckelmantel (52) und einem Deckelboden ausgebildet ist und der Deckelmantel (52) den zweiten Abschnitt (23) umgibt, wobei der Deckel (32) und die Polscheibe (61) zusammen ein einstückiges Bauteil sind, wobei die den Ankerraum (34) ausbildende Innenausnehmung (26) in radialer Richtung von dem Polrohr (20) und an einem zweiten axialen Ende von dem Deckel (21) begrenzt wird, **dadurch gekennzeichnet, dass** die den Ankerraum (34) ausbildende Innenausnehmung (26) an einem ersten axialen Ende von einem an dem Polrohr ausgebildeten Joch (28) begrenzt wird und der Deckelmantel (52) mit seiner Innenumfangsfläche (55) an einer Außenumfangsfläche des den Ankerraum (34) begrenzenden Polrohrs (20) anliegt und wobei der Außendurchmesser des zweiten Abschnitts (23) 10% bis 30%, insbesondere 20%, größer ist als der Außendurchmesser des ersten Abschnitts (21).

2. Elektromagnetisches Stellglied (10) nach Anspruch 1, **dadurch gekennzeichnet, dass** der Deckelboden (54) wenigstens einen als Ankeranschlag (56) ausgebildeten Vorsprung aufweist.

3. Elektromagnetisches Stellglied (10) nach mindestens einem der Ansprüche 1 oder 2, **dadurch gekennzeichnet, dass** der Deckelmantel (52) und/oder der Deckelboden (54) wenigstens eine Nut zur Entlüftung des Ankerraums (34) aufweist bzw. aufweisen.

4. Elektromagnetisches Stellglied (10) nach mindestens einem der Ansprüche 1 bis 3, **dadurch gekennzeichnet, dass** der Deckelboden (54) vom Pohlrohr (20) beabstandet ist.

5. Elektromagnetisches Stellglied (10) nach mindestens einem der Ansprüche 1 bis 4, **dadurch gekennzeichnet, dass** auf der vom Deckel (32) abgewandten Seite des Polrohrs (20) eine den Ankerraum (34) begrenzende Flussscheibe (40) vorgesehen ist, die mit dem Polrohr (20) fest verbunden, insbesondere vercrimpt oder verpresst, ist.

6. Elektromagnetisches Stellglied (10) nach mindestens einem der der Ansprüche 1 bis 5, **dadurch gekennzeichnet, dass** der Deckelmantel (52) außenseitig wenigstens einen Vorsprung (62) aufweist, wobei sich der Vorsprung (62) an einem Stellgliedgehäuse (12) abstützt.

7. Elektromagnetisches Stellglied (10) nach mindestens einem der vorhergehenden Ansprüche, **dadurch gekennzeichnet, dass** der Deckel (32) eine Ausnehmung zur Anordnung eines elektrischen Steckers zur Bestromung der Spule (18) umfasst und/oder dass der Deckel (32) pulvermetallurgisch hergestellt, insbesondere gesintert, ist.

8. Druckregelventil, umfassend ein Stellglied (10) nach einem der vorhergehenden Ansprüche, wobei ein Ventilelement zum Leiten und Druckregeln eines Arbeitsmediums, wie etwa Öl, mittels des Stellelements (46) betätigbar ist.

## Claims

1. Electromagnetic actuator (10) having a housing (12), with a coil former (16) which is arranged in the housing (12) and runs in a rotationally symmetrical manner around a longitudinal axis (14) and has a coil (18), which runs around the longitudinal axis (14), for generating a magnetic field for moving an armature (36), wherein a pole tube (20) is provided inside the coil former (16), wherein the pole tube (20) has a first cylindrical portion (21), which is surrounded by the coil (18), and a second portion (23), wherein the pole tube, on its outer circumference (24) in the region of the first portion (21), has an approximately V-shaped cutout (24) and a cylindrical inner recess (26) which forms an armature space (34) in which the armature (36) is mounted such that it can move in a sliding manner along the longitudinal axis (14), wherein the actuator also has an actuating element (46) which is motion-coupled to the armature (36), in particular for actuating a valve element of a pressure control valve, and a pole disc (61) for conducting a magnetic flux, and a cover (32), wherein the cover (32) is of pot-like design with a cover casing (52) and a cover base and the cover casing (52) surrounds the second portion (23), wherein the cover (32) and the pole disk (61) together are a one-piece component, wherein the inner recess (26) which forms the armature space (34) is delimited by the pole tube (20) in the radial direction and by the cover (21) at a second axial end, **characterized in that** the inner recess (26) which forms the armature space (34) is delimited by a yoke (28), which is formed on the pole tube, at a first axial end and the cover casing (52), by way of its inner circumferential face (55), bears against an outer circumferential face of the pole tube (20) which delimits the armature space (34), and wherein the outside diameter of the second portion (23) is 10% to 30%, in particular 20%, larger than the outside diameter of the first portion (21).

2. Electromagnetic actuator (10) according to Claim 1, **characterized in that** the cover base (54) has at least one projection which is in the form of an armature stop (56) .

3. Electromagnetic actuator (10) according to at least one of Claims 1 and 2, **characterized in that** the cover casing (52) and/or the cover base (54) have/has at least one groove for venting the armature space (34).

4. Electromagnetic actuator (10) according to at least one of Claims 1 to 3, **characterized in that** the cover base (54) is at a distance from the pole tube (20).

5. Electromagnetic actuator (10) according to at least one of Claims 1 to 4, **characterized in that** a flux disc (40) which delimits the armature space (34) and is permanently connected to, in particular crimped or pressed with, the pole tube (20) is provided on that side of the pole tube (20) which is averted from the cover (32) .

6. Electromagnetic actuator (10) according to at least one of Claims 1 to 5, **characterized in that** the cover casing (52) has at least one projection (62) on the outside, wherein the projection (62) is supported on an actuator housing (12).

7. Electromagnetic actuator (10) according to at least one of the preceding claims, **characterized in that** the cover (32) comprises a recess for arranging an electrical plug for energizing the coil (18), and/or **in that** the cover (32) is produced by powder metallurgy, in particular sintering.

8. Pressure control valve, comprising an actuator (10) according to one of the preceding claims, wherein a valve element for conducting and controlling the pressure of a working medium, such as oil for example, can be actuated by means of the actuating element (46).

## Revendications

1. Organe de réglage électromagnétique (10) comprenant un boîtier (12), comprenant un corps de bobine (16) agencé dans le boîtier (12) et s'étendant de manière symétrique en rotation autour d'un axe longitudinal (14), qui porte une bobine (18) s'étendant autour de l'axe longitudinal (14) pour générer un champ magnétique pour déplacer un induit (36), un tube polaire (20) étant prévu à l'intérieur du corps de bobine (16), le tube polaire (20) présentant une première section cylindrique (21) entourée par la bobine (18) et une deuxième section (23), le tube polaire présentant sur sa périphérie extérieure (24), dans la zone de la première section (21), un évidement (24) approximativement en forme de V et un retrait intérieur cylindrique (26) qui forme un espace d'induit (34) dans lequel l'induit (36) est logé de manière à pouvoir coulisser le long de l'axe longitudinal (14), l'organe de réglage présentant en outre un élément de réglage (46) couplé en mouvement à l'induit (36), en particulier pour actionner un élément de soupape d'une soupape de régulation de pression, et un disque polaire (61) pour conduire un flux magnétique et un couvercle (32), le couvercle (32) étant configuré en forme de pot avec une enveloppe de couvercle (52) et un fond de couvercle et l'enveloppe de couvercle (52) entourant la deuxième section (23), le couvercle (32) et le disque polaire (61) étant ensemble un composant monobloc, le retrait intérieur (26) formant l'espace d'induit (34) étant délimité dans la direction radiale par le tube polaire (20) et à une deuxième extrémité axiale par le couvercle (21), **caractérisé en ce que** le retrait intérieur (26) formant l'espace d'induit (34) est délimité à une première extrémité axiale par une culasse (28) formée sur le tube polaire et l'enveloppe de couvercle (52) s'applique par sa surface périphérique intérieure (55) sur une surface périphérique extérieure du tube polaire (20) délimitant l'espace d'induit (34) et le diamètre extérieur de la deuxième section (23) étant supérieur de 10 % à 30 %, en particulier de 20 %, au diamètre extérieur de la première section (21).

2. Organe de réglage électromagnétique (10) selon la revendication 1, **caractérisé en ce que** le fond de couvercle (54) présente au moins une saillie configurée sous forme de butée d'induit (56).

3. Organe de réglage électromagnétique (10) selon au moins l'une quelconque des revendications 1 ou 2, **caractérisé en ce que** l'enveloppe de couvercle (52) et/ou le fond de couvercle (54) présente ou présentent au moins une rainure pour l'aération de l'espace d'induit (34).

4. Organe de réglage électromagnétique (10) selon au moins l'une quelconque des revendications 1 à 3, **caractérisé en ce que** le fond de couvercle (54) est espacé du tube polaire (20).

5. Organe de réglage électromagnétique (10) selon au moins l'une quelconque des revendications 1 à 4, **caractérisé en ce que** sur le côté du tube polaire (20) détourné du couvercle (32) est prévu un disque de flux (40) délimitant l'espace d'induit (34), qui est relié de manière fixe au tube polaire (20), en particulier serti ou assemblé par pression.

6. Organe de réglage électromagnétique (10) selon au moins l'une quelconque des revendications 1 à 5, **caractérisé en ce que** l'enveloppe de couvercle (52) présente au moins une saillie (62) sur le côté extérieur, la saillie (62) s'appuyant sur un boîtier d'organe de réglage (12).

7. Organe de réglage électromagnétique (10) selon au moins l'une quelconque des revendications précédentes, **caractérisé en ce que** le couvercle (32) comprend un retrait pour l'agencement d'une fiche électrique pour l'alimentation de la bobine (18) et/ou **en ce que** le couvercle (32) est fabriqué par métallurgie des poudres, en particulier fritté.

8. Soupape de régulation de pression, comprenant un organe de réglage (10) selon l'une quelconque des revendications précédentes, un élément de soupape destiné à conduire et à réguler en pression un fluide de travail, tel que de l'huile, pouvant être actionné au moyen de l'élément de réglage (46).
